# EUROPÄISCHE PATENTSCHRIFT

(11) **EP 3 364 529 B1**
(45) Veröffentlichungstag und Bekanntmachung des Hinweises auf die Patenterteilung: **10.03.2021**
(21) Anmeldenummer: 18153262.3
(22) Anmeldetag: 24.01.2018
(51) Int. Cl.: H02K 15/12, H02K 3/50

(54) **STATOR FÜR EINEN ELEKTROMOTOR**
STATOR FOR AN ELECTRIC MOTOR
STATOR POUR UN MOTEUR ÉLECTRIQUE

(30) Priorität: 21.02.2017 DE 102017103514
(43) Veröffentlichungstag der Anmeldung: 22.08.2018
(73) Patentinhaber: Dr. Fritz Faulhaber GmbH & Co. KG, 71101 Schönaich (DE)
(72) Erfinder: ILG, Jurij, 71069 Sindelfingen (DE); WINTERER, Mario, 70771 Leinfelden-Echterdingen (DE)
(74) Vertreter: Patent- und Rechtsanwälte Dr. Solf & Zapf

(56) Entgegenhaltungen:
- US-A- 3 060 335
- US-A- 3 075 250

## Beschreibung

Die Erfindung betrifft einen Stator für einen Elektromotor, aufweisend ein Gehäuse, welches eine Spulenwicklung aufnimmt, wobei eine Formmasse die Spulenwicklung zumindest teilweise umschließt, wobei ein Dichtring axial zwischen einer das Gehäuse axial abschließenden Gehäusewand und der Spulenwicklung angeordnet ist und der Dichtring einen an einem stirnseitigen Endabschnitt der Spulenwicklung umfangsgemäß anliegenden Anlageabschnitt aufweist, und sich der Dichtring zumindest von dem stirnseitigen Endabschnitt der Spulenwicklung bis zu einer Innenwand eines die Spulenwicklung umfangsgemäß umschließenden Teils des Gehäuses radial erstreckt.

Weiterhin betrifft die Erfindung ein Verfahren zur Herstellung eines Stators der eingangs genannten Art.

Es ist aus verschiedenen Gründen vorteilhaft, einen Stator eines Elektromotors mit einer Formmasse zu kapseln. Durch eine Kapselung mit einer Formmasse werden beispielsweise durch Vibrationen verursachte Kurzschlüsse in der Spulenwicklung vermieden und die thermische Ankopplung der Spulenwicklung an das Gehäuse verbessert. Zudem wird die Beständigkeit gegenüber Umwelteinflüssen und aggressiven Medien verbessert.

Ein derartiger Stator ist aus der US 3,075,250 A bekannt. Dieser Stator wird in einem Montageprozess hergestellt, in welchem die Spulenwicklung vollständig von Endkappen, einem Rahmen bzw. einem Gehäuse und einem Kernaufbau umschlossen ist und anschließend die Freiräume zwischen den Endkappen, dem Gehäuse und der Spulenwicklung von einer Kunststoffmasse ausgefüllt werden.

Ein weiterer Stator ist aus der DE 101 44 653 A1 bekannt. Der Stator wird hergestellt, indem ein Spulenkörper mit einem Stützkörper und einer umfangsgemäß auf den Stützkörper aufgebrachten Spulenwicklung in ein Gehäuse eingebracht wird. Der Stützkörper wird in dem Gehäuse zwischen einem Gehäusedeckel und einer Gehäusewand eingespannt, indem der Deckel geschlossen wird. Hierbei dienen zwei jeweils an den Stirnseiten des Stützkörpers angeordnete Dichtringe zur Zentrierung der Spulenwicklung bezüglich einer Motorachse des Elektromotors und in Zusammenwirkung mit dem Gehäuse und dem Stützkörper zum hermetischen Verschluss der Spulenwicklung in dem Gehäuse. Eine Formmasse wird nach dem Verschließen des Gehäuses durch Öffnungen im Deckel in das Gehäuse eingefüllt. Bei dem zuvor beschriebenen Stator besteht der Nachteil, dass die axiale Zentrierung der Spulenwicklung bezüglich der Motorachse nach dem Schließen des Gehäuses nicht überprüft werden kann. Die Spulenwicklung kann infolgedessen unzureichend bezüglich der Motorachse zentriert sein. Hierdurch können bei der Herstellung des Stators weitere Fertigungsschritte anfallen wie z. B. das Ausrichten des Rotors bezüglich des Spulenkörpers auf eine gemeinsame mittlere Längsachse (Auswuchten).

Die DE 38 44 781 C2 offenbart einen vergossenen Spulenkörper mit einem Stützkörper und mehreren mit dem Stützkörper über eine Formmasse verbundenen Einzelwicklungen. Bei der Herstellung des Spulenkörpers wird der Stützkörper mit den Einzelwicklungen versehen, wobei die Einzelwicklungen hilfsweise mit einem Band auf dem Stützkörper fixiert werden müssen. Anschließend wird der in dieser Weise mit den Einzelwicklungen versehene Stützkörper in ein Formwerkzeug eingesetzt. Die Bänder werden von den Einzelwicklungen entfernt, bevor die Formmasse in das Gehäuse eingefüllt wird. Beim Entfernen der Bänder von den Einzelwicklungen besteht die Gefahr, dass deren Ausrichtung bezüglich der Motorachse verändert wird.

Aus der US 3,060,335 A ist ein flüssigkeitsgekühlter Elektromotor bekannt, bei welchem der Stator mit einer Formmasse vergossene Statorwicklungen umfasst. Die Wickelköpfe dieser Statorwicklungen sind von Dichtringen umgeben, welche sich von dem stirnseitigen Endabschnitt der Spulenwicklung bis zu einer Innenwand eines die Spulenwicklung umfangsgemäß umschließenden Teils des Gehäuses radial erstrecken.

Alternativ zu einem Spulenkörper mit Einzelwicklungen kann eine zylindrische Spulenwicklung ohne Einzelwicklungen und ohne Stützkörper mit einer Formmasse vergossen werden. Die Spulenwicklung wird zum Vergießen mit der Formmasse auf einen kegelförmigen Dorn eines Formwerkzeugs aufgesteckt, wobei das Formwerkzeug die Spulenwicklung umfangsgemäß umgibt. Da das Formwerkzeug die Spulenwicklung bezüglich des Dorns zentriert, an dessen Stelle bei dem fertiggestellten Stator ein Rotor eingesetzt ist, muss ein Kompromiss zwischen einer hinreichenden Zentrierung bezüglich der Motorachse und einem vollständigen Schutz der Spulenwicklung durch die Formmasse gefunden werden. Zudem ist aufgrund der kegelförmigen Form des Dorns bei dem fertig vergossenen Stator der Abstand zwischen der Spulenwicklung und dem Rotor vergrößert. Das reduziert den Wirkungsgrad des Elektromotors.

Zum Vergießen der in der DE 101 44 653 A1 und der DE 38 44 781 C2 beschriebenen Varianten der Spulenwicklung wird das Formwerkzeug über einen Deckel verschlossen und eine Formmasse wird in das Formwerkzeug eingefüllt. Hierbei sind an einer während des Einfüllens der Formmasse verschlossenen Öffnung des Formwerkzeugs empfindliche elektrische Anschlüsse der Einzelwicklungen aus dem Formwerkzeug herausgeführt. Um die elektrischen Anschlüsse vor einer Beschädigung zu schützen, befindet sich ein elastischer Ring zwischen der Öffnung des Formwerkzeugs und dem Deckel des Formwerkzeugs. Dieser elastische Ring muss nach jedem Vergießen ausgetauscht werden. Bei dem zuvor beschriebenen Herstellungsverfahren besteht zudem der Nachteil, dass der Einsatz von Trennmitteln erforderlich ist, und dass die Formwerkzeuge aufwändig gereinigt werden müssen.

Der Erfindung liegt die Aufgabe zugrunde, einen Stator zur Verfügung zu stellen, bei dem die Spulenwicklung, insbesondere durch weniger Herstellungsschritte, weniger aufwändig zentriert werden kann, wobei die Zentrierung gleichzeitig verbessert werden soll. Weiterhin soll ein entsprechendes Verfahren zur Herstellung eines solchen Stators zur Verfügung gestellt werden, das weniger aufwändig ist und bei dem ein verbesserter Stator hergestellt werden kann, insbesondere bei dem die Zentrierung der Spulenwicklung verbessert wird.

Die Aufgabe wird erfindungsgemäß durch die Merkmale des Anspruchs 1 dadurch gelöst, dass der Dichtring eine sich radial innen an den Anlageabschnitt anschließende, sich radial erstreckende Auflageoberfläche zur Auflage des Endabschnitts der Spulenwicklung gegen axiale Bewegungen der Spulenwicklung aufweist. Eine derartige Ausgestaltung des Dichtrings vereinfacht die Herstellung des erfindungsgemäßen Stators weiter, da die Auflageoberfläche in Zusammenwirkung mit dem Anlageabschnitt die Spulenwicklung zentriert. Zudem ist sichergestellt, dass die Spulenwicklung bei der Herstellung mit dem Formwerkzeug nicht in Kontakt kommt. Die Spulenwicklung kann auf diese Weise nicht mit dem Formwerkzeug verkleben, so dass sie beim Entformen nicht beschädigt werden kann. Ebenso ist die Spulenwicklung bei der Montage des Elektromotors vor Beschädigungen geschützt.

Der erfindungsgemäße Stator wird durch ein Herstellungsverfahren gemäß dem Anspruch 15 hergestellt. Bei diesem Verfahren wird ein Formwerkzeug mit einem mit seiner Längsachse zentriert zu einer Motorachse des Elektromotors verlaufenden zylindrischen Dorn verwendet. Gemäß diesem Verfahren ist vorgesehen,
- dass der Dichtring axial auf einen Dorn eines Formwerkzeugs bis zu einer Auflage auf einem axial an den Dorn anschließenden Anschlag des Formwerkzeugs aufgeschoben wird,
- wobei das Gehäuse auf den Dorn bis zu einer Auflage auf dem Anschlag aufgesetzt wird,
- wobei eine Formmasse in einen zwischen dem Gehäuse und dem Dorn gebildeten Zwischenraum gefüllt wird,
- wobei die Spulenwicklung in die Formmasse eingetaucht wird,
- wobei die Spulenwicklung bis zu einer Anlage an, insbesondere zusätzlich einer Auflage auf, dem Dichtring in das Gehäuse eingesetzt wird,
- wobei die Formmasse ausgehärtet wird und
- wobei das Formwerkzeug von einem durch die vorherigen Schritte hergestellten Stator gelöst wird.

Bei dem zuvor beschriebenen Herstellungsverfahren des erfindungsgemäßen Stators übernimmt der Dichtring Funktionen, die bisher das Formwerkzeug hatte. Der Dichtring zentriert die Spulenwicklung bezüglich der Motorachse beim Eintauchen in die Formmasse. Da der Dichtring auf dem Anschlag des Formwerkzeugs aufliegt, kann er auch zusammen mit dem Anschlag die Spulenwicklung zentrieren. Aufgrund dessen, dass während des Zentrierens der Spulenwicklung das Gehäuse geöffnet ist, kann eine hinreichende Zentrierung der Spulenwicklung während des Eintauchens der Spulenwicklung in die Formmasse kontrolliert werden. Folglich entfallen mit Vorteil Nachbearbeitungsschritte. Somit kann durch die Ausgestaltung des erfindungsgemäßen Stators, und insbesondere des erfindungsgemäßen Dichtrings, die Spulenwicklung bezüglich der Motorachse weniger aufwändig und besser zentriert werden.

Dadurch, dass sich der Dichtring zwischen der Gehäuse-Innenwand und dem stirnseitigen Endabschnitt des Gehäuses erstreckt, können sich der Dichtring und somit auch die in den Dichtring eingesetzte Spulenwicklung nicht bezüglich der Motorachse radial verschieben. Der Dichtring begünstigt, dass eine fertiggestellte Baugruppe des erfindungsgemäßen Stators nach der Herstellung mittels eines Verfahrens mit Formwerkzeug, wie z. B. durch Spritzgießen, erheblich vereinfacht von dem Formwerkzeug gelöst werden kann. Aufgrund der Verwendung des Dichtrings muss das Formwerkzeug zudem keine Konturen zur Ausrichtung der Spulenwicklung aufweisen. Hierdurch wiederum kann der fertiggestellte Stator leichter von dem Formwerkzeug gelöst werden, wodurch weitere Nachbearbeitungsschritte nach dem Entformen entfallen können. Zusammenfassend wird durch das erfindungsgemäße Verfahren die Herstellung vereinfacht, wobei gleichzeitig eine genaue Zentrierung der Spulenwicklung bezüglich der Motorachse gewährleistet ist.

Als vorteilhafte Ausgestaltung des erst beschriebenen erfindungsgemäßen Herstellungsverfahrens des Stators ist ein Verfahren gemäß Anspruch 16 vorgesehen, bei dem die Spulenwicklung als Segmentwicklung aus mehreren Einzelwicklungen ausgestaltet ist.

Bei dem Verfahren gemäß Anspruch 16 bestehen die gleichen, vorgenannten Vorteile wie bei dem Verfahren gemäß Anspruch 15.

Bevorzugt weist der Dichtring eine Öffnung zum Durchführen eines Dorns eines Formwerkzeugs auf sowie Dichtmittel zur Abdichtung eines zwischen dem Gehäuse und dem Dorn des Formwerkzeugs verlaufenden Spaltes. Dies erleichtert die Herstellung des Stators durch ein erfindungsgemäßes Herstellungsverfahren weitergehend, da der fertiggestellte Stator leichter von dem Formwerkzeug gelöst werden kann und weitere Schritte zur Nachbearbeitung nach dem Entformen entfallen können.

Insbesondere weist der Dichtring eine ringförmige Dichtlippe auf, wobei sich die Dichtlippe bezüglich der Motorachse radial innen an die Auflageoberfläche des Dichtrings anschließt, d.h. die Dichtlippe liegt radial zwischen einer Öffnung des Dichtrings zum Durchführen des Formwerkzeug-Dorns und der Auflageoberfläche des Dichtrings. Die Dichtlippe verbessert eine Abdichtung eines zwischen dem Dichtring und dem Dorn des Formwerkzeugs radial verlaufenden Spaltes.

Die Dichtwirkung der Dichtlippe kann optimiert werden, indem sich die Dichtlippe in radialer Richtung verjüngt und eine stumpfwinklig zur Auflageoberfläche des Dichtrings geneigte, kreisringförmige Oberfläche aufweist.

Insbesondere ist die Auflageoberfläche des Dichtrings kreisringförmig ausgebildet. Ein derart hergestellter Dichtring ist einfach und somit kostengünstig herstellbar, wobei der Dichtring zum Zentrieren von Spulenwicklungen geeignet ist, welche aus einer Wicklung oder mehreren, z. B. durch Verbacken, miteinander verbundenen Einzelwicklungen gebildet sind.

Vorzugsweise ist vorgesehen, dass zumindest ein kreisringförmiger Teil der Auflageoberfläche des Dichtrings derart an eine Oberflächenkontur des stirnseitigen Endabschnitts der Spulenwicklung angepasst ausgestaltet ist, dass der stirnseitige Endabschnitt der Spulenwicklung formschlüssig mit dem Dichtring gegen Verdrehungen um die Motorachse verbunden ist. Insbesondere sind hierunter Ausgestaltungen des Dichtrings zu verstehen, welche eine Auflageoberfläche mit einer Negativkontur entsprechend der Oberflächenkontur eines stirnseitigen Endabschnitts der Spulenwicklung aufweisen. Hierdurch wird das Ausrichten der Spulenwicklung bezüglich der Motorachse erheblich vereinfacht.

Insbesondere ist vorgesehen, dass die Spulenwicklung als Segmentwicklung aus mehreren Einzelwicklungen ausgestaltet ist. Hierbei ist es vorteilhaft, dass die Oberflächenkontur der Auflageoberfläche des Dichtrings Ausnehmungen aufweist, wobei die Ausnehmungen an eine Oberflächenkontur von stirnseitigen Endabschnitten der Einzelwicklungen angepasst ausgestaltet sind. Ein derartiger Dichtring ermöglicht, dass bei der Herstellung des Stators die Einzelwicklungen der Spulenwicklung einzeln in die Ausnehmungen des Dichtrings eingesetzt werden können, wobei die Einzelwicklungen durch die Ausnehmungen einzeln ausgerichtet werden. In diesem Zusammenhang ist es besonders vorteilhaft, wenn die Ausnehmungen derart ausgestaltet sind, dass sie die Einzelwicklungen derart ausrichten, dass sie gleichmäßig über den Umfang verteilt und in eine einheitliche Richtung ausgerichtet sind.

Bevorzugt weist der Dichtring eine Ringnut auf, die derart ausgestaltet ist, dass sie die radiale Elastizität des Dichtrings bezüglich der Motorachse verstärkt. Insbesondere ist der Dichtring im Bereich der Ringnut im radialen Querschnitt U-förmig ausgebildet. Der U-förmige Abschnitt des Dichtrings umschließt die Ringnut vorzugsweise. Insbesondere bilden der Anlageabschnitt und ein bezüglich der Motorachse sich radial außen an den Anlageabschnitt anschließender Ringsteg einen L-förmigen Teilabschnitt des U-förmigen Abschnitts, welcher die Spulenwicklung zentriert. An den Ringsteg schließt sich insbesondere radial außen eine Ringwand an, welche sich längs der Innenwand des Gehäuses erstreckt und einen zweiten Schenkel des U-förmigen Abschnitts bildet. Die Ringwand ist vorzugsweise radial dünner als der Anlageabschnitt des Dichtrings. Da bevorzugt der Anlageabschnitt radial gleich dick ist wie der Ringsteg axial dick ist, sind sowohl der Ringsteg als auch der Anlageabschnitt weniger elastisch als die Ringwand. Die Ringwand begünstigt bedingt durch ihre gegenüber dem Anlageabschnitt und dem Ringsteg vergrößerte Elastizität eine verbesserte Abdichtung eines zwischen dem Dichtring und dem Gehäuse bestehenden Spaltes.

Insbesondere weist das Gehäuse einen zylinderförmigen Gehäusemantel und zwei jeweils endseitig mit dem Gehäusemantel verbindbare Gehäusedeckel auf, wobei zumindest ein Gehäusedeckel Löcher zum Einführen von Befestigungsmitteln zur Befestigung des Gehäuses aufweist, wobei der Dichtring zwischen dem Gehäusedeckel und der Spulenwicklung angeordnet ist und der Dichtring, insbesondere mit seiner Auflageoberfläche, einen Anschlag für die Befestigungsmittel bildet. Der Dichtring schützt hierdurch die Spulenwicklung z. B. vor dem Eindrehen zu langer Schrauben bei der Befestigung des Gehäuses des Stators.

Weitere vorteilhafte Ausgestaltungen der Erfindung ergeben sich aus der folgenden Figurenbeschreibung und den abhängigen Unteransprüchen.

Es zeigen:
- Fig. 1: einen Querschnitt durch einen Elektromotor mit einem erfindungsgemäßen Stator durch eine durch eine Motorachse verlaufende Querschnittsebene,
- Fig. 2a: eine Ansicht auf den Dichtring gemäß einer ersten Ausführungsform,
- Fig. 2b: einen Querschnitt längs der Motorachse durch den Dichtring gemäß der ersten Ausführungsform,
- Fig. 2c: eine weitere Ansicht des Dichtrings gemäß der ersten Ausführungsform,
- Fig. 3a: eine Ansicht auf den Dichtring gemäß einer zweiten Ausführungsform,
- Fig. 3b: einen Querschnitt längs der Motorachse durch den Dichtring gemäß der zweiten Ausführungsform,
- Fig. 3c: eine weitere Ansicht des Dichtrings gemäß der zweiten Ausführungsform,
- Figuren 4a-4f: schematische Ansichten von Herstellungsschritten eines erfindungsgemäßen Herstellungsverfahrens zur Herstellung eines erfindungsgemäßen Stators,
- Fig. 5: einen Querschnitt durch einen Gehäusemantel mit Einzelblechen und Spannringen durch die durch die Motorachse verlaufende Querschnittsebene und
- Fig. 6: einen Querschnitt durch einen erfindungsgemäßen Stator durch die durch die Motorachse verlaufende Querschnittsebene.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

Alle aufgeführten radialen und axialen Anordnungen beziehen sich stets auf eine Motorachse A-A des Elektromotors.

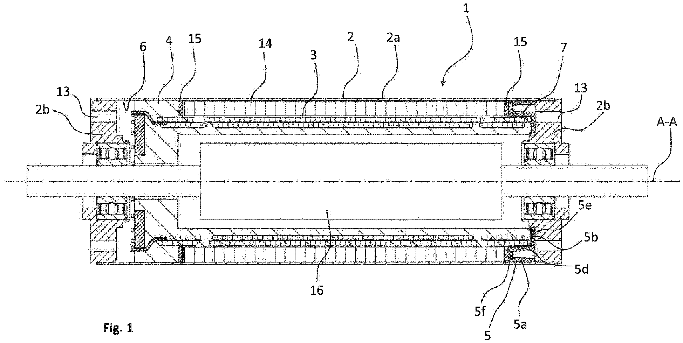

In Fig. 1 ist ein Elektromotor mit einem erfindungsgemäßen Stator 1 dargestellt. Der Stator 1 weist ein Gehäuse 2 auf, welches eine Spulenwicklung 3 aufnimmt. Die Spulenwicklung 3 des Stators 1 umschließt einen Rotor 16, der um die Motorachse A-A drehbar ist. Eine Formmasse 4 umgibt die Spulenwicklung 3 zumindest teilweise. Axial zwischen der Spulenwicklung 3 und einer das Gehäuse 2 axial abschließenden Gehäusewand befindet sich ein Dichtring 5. Der Dichtring 5 besteht vorzugsweise aus einem Polymer-Werkstoff. Der Dichtring 5 weist einen an einem stirnseitigen Endabschnitt 7 der Spulenwicklung 3 umfangsgemäß anliegenden Anlageabschnitt 5a auf. Erfindungsgemäß erstreckt sich der Dichtring 5 radial zumindest von einer Innenwand 6 eines die Spulenwicklung 3 umfangsgemäß umschließenden Teils des Gehäuses 2 bis zu dem stirnseitigen Endabschnitt 7 der Spulenwicklung 3.

Der Dichtring 5 besitzt eine, sich radial erstreckende Auflageoberfläche 5b zur Auflage gegen axiale Bewegungen des stirnseitigen Endabschnitts 7 der Spulenwicklung 3. Die Auflageoberfläche 5b des Dichtrings 5 schließt sich radial innen an den Anlageabschnitt 5a des Dichtrings 5 an.

Insbesondere ist vorgesehen, dass das Gehäuse 2 des Stators 1 einen zylinderförmigen Gehäusemantel 2a und zwei jeweils endseitig mit dem Gehäusemantel 2a verbindbare Gehäusedeckel 2b aufweist. Die Gehäusedeckel 2b können teilweise oder vollständig die das Gehäuse 2 axial abschließende Gehäusewand bilden. Zumindest ein Gehäusedeckel 2b weist Löcher 13 zum Einführen von Befestigungsmitteln zur Befestigung des Gehäuses 2 auf. Der Dichtring 5 ist insbesondere zwischen dem Gehäusedeckel 2b und der Spulenwicklung 3 angeordnet. Insbesondere bildet der Dichtring 5, bevorzugt mit seiner Auflageoberfläche 5b, einen Anschlag für die Befestigungsmittel. Hierdurch wird bevorzugt vermieden, dass die Spulenwicklung 3 beim Einführen von Befestigungsmitteln in die Löcher 13 des Gehäusedeckels 2b zum Befestigen des Gehäuses 2 beschädigt wird.

Bevorzugt erstreckt sich der Dichtring 5, bevorzugt in dem Bereich der Auflageoberfläche 5b axial, vorzugsweise von der Spulenwicklung 3, bis zu dem Gehäusedeckel 2b. In dieser Weise kann der Dichtring 5 das Eindringen von Schmutz in das Gehäuse 2 verhindern.

Insbesondere erstreckt sich eine radial zu der Auflageoberfläche 5b außenliegende und direkt an die Auflageoberfläche 5b anschließende Anlageoberfläche 5d des Anlageabschnitts 5a axial.

Insbesondere sind die Auflageoberfläche 5b und der Anlageabschnitt 5a des Dichtrings 5 derart ausgestaltet, dass sie die Spulenwicklung 3 bezüglich der Motorachse A-A zentrieren. Bevorzugt sind die Auflageoberfläche 5b und der Anlageabschnitt 5a radialsymmetrisch ausgestaltet.

Es kann für eine Zentrierung der Spulenwicklung 3 vorteilhaft sein, dass der Anlageabschnitt 5a radial dicker ist als ein Auflageabschnitt 5e axial dick ist. Der Auflageabschnitt 5e entspricht einem Abschnitt des Dichtrings 5 mit der Auflageoberfläche 5b. Zudem kann es vorteilhaft sein, dass der Anlageabschnitt 5a axial länger ist als der Auflageabschnitt 5e radial lang ist. In diesem Fall hat der Anlageabschnitt 5a des Dichtrings 5 hauptsächlich eine Zentrierfunktion und die Auflageoberfläche 5b die Funktion, die Spulenwicklung 3 vor mechanischen Beschädigungen zu schützen.

Insbesondere schließt sich an den Anlageabschnitt 5a radial außen ein ringförmiger Ringsteg 5f an. Der Ringsteg 5f erstreckt sich insbesondere radial von dem Anlageabschnitt 5a weg. Auf diese Weise bildet der Ringsteg 5f zusammen mit dem Anlageabschnitt 5a im radialen Querschnitt ein L-förmiges Profil. Der Ringsteg 5f weist vorzugsweise eine derartige radiale Länge auf, dass ein axial zwischen der Spulenwicklung 3 und der Innenwand 6 des Gehäuses 2 bestehender Spalt überbrückt ist. Vorzugsweise ist der Ringsteg 5f gleich radial dick wie der Anlageabschnitt 5a axial breit ist. Der Ringsteg 5f wirkt insbesondere mit dem Anlageabschnitt 5a zusammen und zentriert die Spulenwicklung 3 bezüglich der Motorachse A-A.

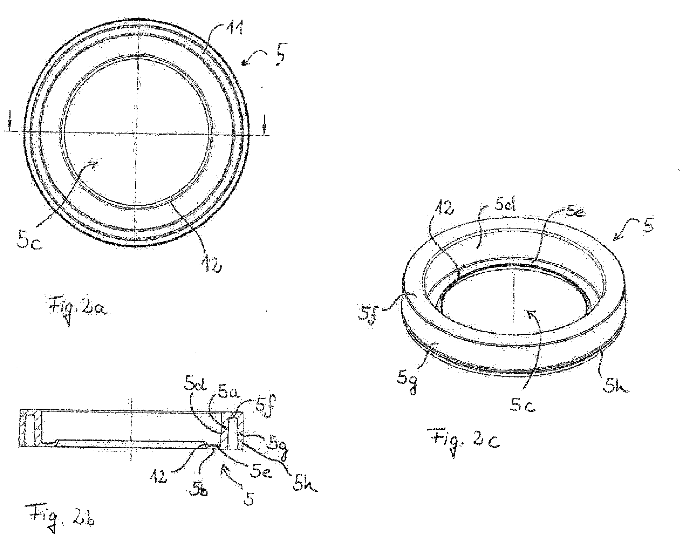

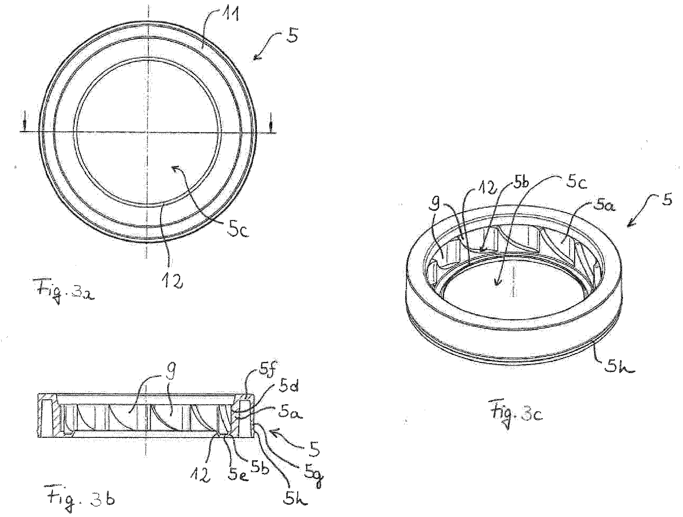

Ein erstes Ausführungsbeispiel für einen Dichtring 5 ist in den Figuren 2a bis 2c dargestellt. Ein zweites Ausführungsbeispiel für den Dichtring 5 ist in den Figuren 3a bis 3c dargestellt. Die Figuren 2b und 3b zeigen zwei verschiedene Ausführungsformen eines Dichtrings 5 im Querschnitt, wobei die Darstellungen gegenüber der Darstellung des Dichtrings 5 der Fig. 1 vergrößert sind. Anhand der vergrößerten Querschnitte können weitere bevorzugte Merkmale des Dichtrings 5 einfacher nachvollzogen werden können als anhand von der Querschnittsdarstellung des Dichtrings 5 gemäß Fig. 1. Nachfolgend sind diese weiteren vorzugsweisen Merkmale beschrieben.

Bevorzugt weist der Dichtring 5 eine Öffnung 5c zum Durchführen eines Dorns 21 eines Formwerkzeugs 20 auf sowie Dichtmittel zur Abdichtung eines zwischen dem Gehäuse 2 und dem Dorn 21 des Formwerkzeugs 20 verlaufenden Spaltes. Der Anlageabschnitt 5a ist vorzugsweise in Richtung zu dem Endabschnitt 7 der Spulenwicklung 3 konisch aufgeweitet.

Beispielsweise kann der Dichtring 5 eine ringförmige Dichtlippe 12 aufweisen. Insbesondere schließt sich die Dichtlippe 12 radial innen an die Auflageoberfläche 5b an, d. h. die Dichtlippe 12 ist zwischen der Öffnung 5c und der Auflageoberfläche 5b angeordnet.

Besonders bevorzugt ist vorgesehen, dass sich die Dichtlippe 12 in radialer Richtung verjüngt und eine stumpfwinklig zur Auflageoberfläche 5b des Dichtrings 5 geneigte, kreisringförmige Oberfläche aufweist, siehe Figuren 2b und 3b. Bevorzugt schließt die Dichtlippe 12 mit ihrer der Auflageoberfläche 5b zugewandten Oberfläche einen stumpfen Winkel ein. Besonders bevorzugt verjüngt sich die Dichtlippe 12 auf Zweidrittel der Dicke des Auflageabschnitts 5e mit der Auflageoberfläche 5b.

Vorzugsweise besitzt der Dichtring 5 eine kreisringförmige Auflageoberfläche 5b, siehe Figur 2a. Insbesondere erstreckt sich die radial zu der Auflageoberfläche 5b außenliegende und direkt an die Auflageoberfläche 5b anschließende Anlageoberfläche 5d des Anlageabschnitts 5a axial.

Zusätzlich kann zumindest ein kreisringförmiger Teil der Auflageoberfläche 5b des Dichtrings 5 derart an eine Oberflächenkontur des stirnseitigen Endabschnitts 7 der Spulenwicklung 3 angepasst ausgestaltet sein, dass der stirnseitige Endabschnitt 7 formschlüssig mit dem Dichtring 5 gegen radiale Verdrehungen, d. h. Verdrehungen um die Motorachse A-A, verbunden ist. In diesem Fall zentrieren sowohl der Anlageabschnitt 5a als auch die Auflageoberfläche 5b die Spulenwicklung 3. Der kreisförmige Teil der Auflageoberfläche 5b, der an die Oberflächenkontur der Spulenwicklung 3 angepasst ist, ist zu diesem Zweck bevorzugt gleich axial dick wie der Anlageabschnitt 5a des Dichtrings 5 radial dick ist. Ein mögliches Ausführungsbeispiel für einen derartigen Dichtring 5 ist in den Figuren 3a bis 3c dargestellt.

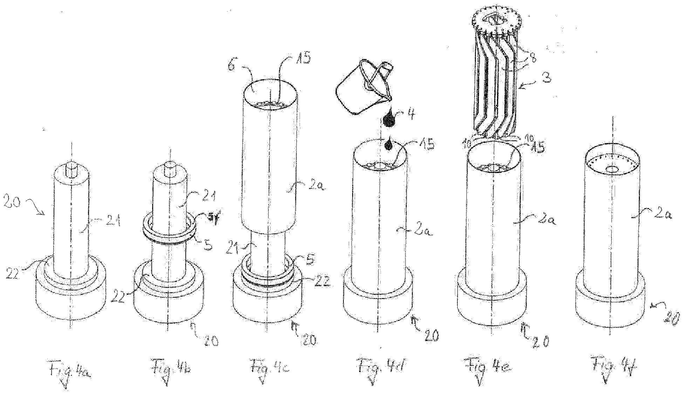

Ein Dichtring 5 gemäß den Figuren 3a bis 3c eignet sich zur Aufnahme einer Spulenwicklung 3, die als Segmentwicklung aus mehreren Einzelwicklungen 8 ausgestaltet ist (eine Ansicht einer Spulenwicklung 3 mit mehreren Einzelwicklungen 8 ist in Fig. 4e gezeigt). Vorzugsweise weist bei dem Dichtring 5 die Oberflächenkontur der Auflageoberfläche 5b Ausnehmungen 9 auf, wobei die Ausnehmungen 9 an eine Oberflächenkontur von stirnseitigen Endabschnitten 10 (siehe Fig. 4e) der Einzelwicklungen 8 angepasst ausgestaltet sind. Besonders bevorzugt ist vorgesehen, dass die Ausnehmungen 9 des Dichtrings 5 derart ausgestaltet sind, dass sie die Einzelwicklungen 8 der Segmentwicklung derart ausrichten, dass sie gleichmäßig über den Umfang verteilt und in eine einheitliche Richtung ausgerichtet sind.

Beispielsweise kann jede Ausnehmung 9 der Auflageoberfläche 5b des Dichtrings 5 eine rampenförmig gekrümmte Teilfläche sein. Jede Teilfläche der Auflageoberfläche 5b kann abschnittsweise tangential zu einem Umfangskreis um die Motorachse A-A verlaufen, siehe Fig. 3c. Vorzugsweise sind die Teilflächen auf dem Umfangskreis gleichmäßig umfangsgemäß verteilt. Insbesondere läuft jede Teilfläche beidseitig in einem zu der nächsten Teilfläche nächstliegenden, umfangsgemäß verlaufenden Umfangsbereich spitz zu.

Bevorzugt ist der Anlageabschnitt 5a, der die Teilflächen der Auflageoberfläche 5b radial außen begrenzt, in Wandsegmente aufgeteilt. Die Wandsegmente erstrecken sich insbesondere jeweils mit einer der Länge der angrenzenden Teilfläche der Auflageoberfläche 5b entsprechenden Länge umfangsgemäß zu dem Umfangskreis entlang der angrenzenden Teilfläche. Die Wandsegmente des Anlageabschnitts 5a erstrecken sich zusätzlich insbesondere axial von den Teilflächen der Auflageoberfläche 5b weg. Das bedeutet, dass die Wandsegmente des Anlageabschnitts 5a entsprechend dem Verlauf der Verjüngungen der Teilflächen der Auflageoberfläche 5b gekrümmt sind. Eine derartige Ausgestaltung des Dichtrings 5 verbessert eine formschlüssige Verbindung zwischen dem Dichtring 5 und einer aus Einzelwicklung 8 bestehenden Spulenwicklung 3 und bevorzugt eine schnellere Herstellung des erfindungsgemäßen Stators 1, da die Einzelwicklungen 8 oder eine aus mehreren Einzelwicklungen 8 bestehende Spulenwicklung 3 leichter ausgerichtet werden können.

Bevorzugt weist der Dichtring 5 eine Ringnut 11 auf, die derart ausgestaltet ist, dass sie die radiale Elastizität des Dichtrings 5 verstärkt, siehe Figuren 1, 2a und 3a. Insbesondere ist der Dichtring 5 im Bereich der Ringnut 11 im radialen Querschnitt U-förmig ausgebildet, siehe Figuren 1, 2b und 3b. Der U-förmige Abschnitt des Dichtrings 5 umschließt insbesondere die Ringnut 11. Die Ringnut 11 kann sich radial außen an den Anlageabschnitt 5a des Dichtrings 5 anschließen. Vorzugsweise umschließt die Ringnut 11 die Spulenwicklung 3 umfangsgemäß.

Der U-förmige Abschnitt des Dichtrings 5 ist insbesondere in Richtung zu einer dem Dichtring 5 nächstliegenden Stirnseite der Spulenwicklung 3 geöffnet. Vorzugsweise ist ein Schenkel des U-förmigen Abschnitts des Dichtrings 5 aus dem Anlageabschnitt 5a gebildet. Dem Anlageabschnitt 5a gegenüberliegend ist vorzugsweise ein zweiter Schenkel des U-förmigen Abschnitts aus einer Ringwand 5g gebildet, welche radial dünner ist als der Anlageabschnitt 5a. Ein Teil des U-förmigen Abschnitts ist weiterhin bevorzugt aus dem Ringsteg 5f gebildet, welcher die Ringwand 5g mit dem Anlageabschnitt 5a verbindet. Die Ringwand 5g kann die Dichtigkeit des Dichtrings 5 verbessern, indem sie sich beispielsweise bedingt durch ihre gegenüber dem Ringsteg 5f und dem Anlageabschnitt 5a vergrößerte Elastizität schneller als der Ringsteg 5f oder der Anlageabschnitt 5a verformt und in dieser Weise an der Innenwand 6 des Gehäuses 2 zumindest abschnittsweise anliegt. Insbesondere die Ringwand 5g ermöglicht somit, dass durch den Dichtring 5 Fertigungstoleranzen der anderen Bauteile des Stators 1 ausgeglichen werden können.

An einer der Innenwand 6 des Gehäuses 2 zugewandten Oberfläche der Ringwand 5g ist insbesondere eine vollumfängliche Rippe 5h ausgebildet, siehe Figuren 2b und 3b. Die Rippe 5h verbessert eine Abdichtung zwischen der Innenwand 6 des Gehäuses 2 und dem Dichtring 5.

Zur Herstellung des Stators 1 ist ein Verfahren vorgesehen, welches anhand von den Figuren 4a bis 4f veranschaulicht ist. Das Herstellungsverfahren eignet sich beispielsweise für Spulenwicklungen 3, die als fertige Baugruppe aus mehreren miteinander verbunden Einzelwicklungen 8 hergestellt sind. Bei dem Herstellungsverfahren wird ein Formwerkzeug 20 mit einem mit seiner Längsachse zentriert zu der Motorachse A-A verlaufenden zylindrischen Dorn 21 verwendet.

Zunächst wird der Dichtring 5 auf den Dorn 21 des Formwerkzeugs 20 (siehe Figuren 4a und 4b) aufgeschoben, bis der Dichtring 5 auf einem Anschlag 22 des Formwerkzeugs 20 aufliegt, der sich an den Dorn 21 axial anschließt. Der Dichtring 5 ist beim Aufschieben auf den Dorn 21 mit seiner Ringnut 11 in Richtung zu dem Anschlag 22 orientiert, so dass der Ringsteg 5f in Richtung zu einem freien Ende des Dorns 21 orientiert ist. Insbesondere ist die Dichtlippe 12 derart in Anpassung an den Dorn 21 ausgestaltet, dass die Dichtlippe 12 umfangsgemäß an dem Dorn 21 dichtend anliegt, wenn der Dichtring 5 auf dem Anschlag 22 des Formwerkzeugs 20 aufliegt.

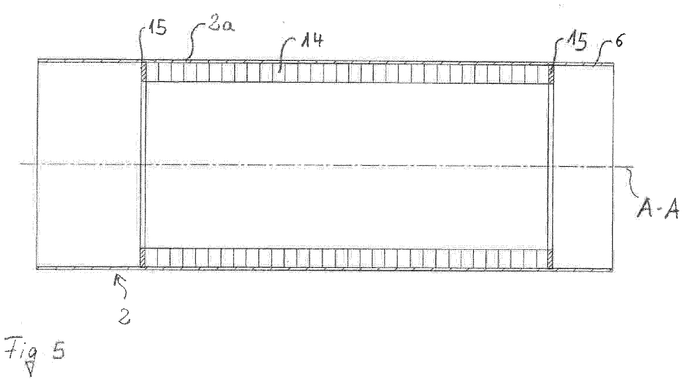

Wenn der Dichtring 5 auf dem Anschlag 22 aufliegt, wird das Gehäuse 2, insbesondere der zylinderförmige Gehäusemantel 2a, aufgeschoben, siehe Fig. 4c. In diesem Verfahrensschritt können weitere Komponenten des Stators 1 gemeinsam mit dem Gehäuse 2 auf den Dorn 21 aufgebracht werden. Beispielsweise können dies Einzelbleche 14 sein, die zusammen mit dem Gehäusemantel 2a ein Blechpaket bilden sowie Spannringe 15 (siehe Fig. 1). Vorzugsweise werden die Einzelbleche 14 über die Spannringe 15 in dem Gehäusemantel 2a gegen axiale Bewegungen fixiert, bevor der Gehäusemantel 2a auf den Anschlag 22 aufgesetzt wird. Ein Querschnitt eines derart vormontierten Gehäusemantels 2a ist in Fig. 5 dargestellt.

Wenn das Gehäuse 2 auf dem Anschlag 22 aufliegt, liegt der Dichtring 5, insbesondere mit seinem Ringsteg 5f und besonders bevorzugt mit seiner Ringwand 5g, dichtend an der die Spulenwicklung 3 umfangsgemäß umschließenden Innenwand 6 des Gehäuses 2 an. Der Dichtring 5 verhindert bevorzugt, insbesondere durch seine Dichtlippe 12, im Bereich des Dorns 21 einerseits und durch die dichtende Anlage an der Innenwand 6 des Gehäuses 2 andererseits, dass eine Formmasse 4, welche in einen Zwischenraum zwischen dem Dorn 21 des Formwerkzeugs 20 und dem Gehäuse 2 eingefüllt wird, nicht ausfließen kann. Das Einfüllen einer Formmasse 4 ist in Fig. 4d dargestellt. Die Formmasse 4 kann beispielsweise eine Vergussmasse sein, welche durch Erhitzen aushärtet, beispielsweise umfassend duroplastischen Harz.

In einem anschließenden Schritt wird die Spulenwicklung 3 in die Formmasse 4 eingetaucht und über den Dichtring 5 bezüglich der Motorachse A-A zentriert. Die Zentrierung der Spulenwicklung 3 erfolgt über eine Anlage an dem Anlageabschnitt 5a, insbesondere zusätzlich über eine Auflage auf der Auflageoberfläche 5b, des Dichtrings 5.

Wenn die Spulenwicklung 3 als fertige Baugruppe in die Formmasse 4 eingetaucht wird, ist ein Dichtring 5 gemäß der ersten Ausführungsform gemäß den Figuren 2a bis 2c geeignet, um die Spulenwicklung 3 axial bezüglich der Motorachse A-A zu zentrieren. Die als Baugruppe ausgebildete Spulenwicklung 3 kann beispielsweise aus mehreren Einzelwicklungen 8 bestehen, die z. B. über Verbacken, vor dem Eintauchen miteinander verbunden sind. Entgegen einer eingangs (im allgemeinen Teil der Beschreibung) beschriebenen Spulenwicklung 3 weist die erfindungsgemäße Spulenwicklung 3 jedoch keinen Stützkörper auf.

Alternativ zu einer als fertige Baugruppe ausgebildeten Spulenwicklung 3 können Einzelwicklungen 8 der Spulenwicklung 3 einzeln in die Formmasse 4 eingetaucht werden (nicht in den Figuren dargestellt). Für diesen Zweck ist bevorzugt die zweite Ausführungsform des Dichtrings 5 gemäß den Figuren 3a bis 3c vorgesehen. Insbesondere wird sich hierbei zu Nutze gemacht, dass die Ausnehmungen 9 des Anlageabschnitts 5a des Dichtrings 5 derart ausgestaltet sind, dass sie die Einzelwicklungen 8 derart ausrichten, dass sie gleichmäßig über den Umfang verteilt und in eine einheitliche Richtung ausgerichtet sind.

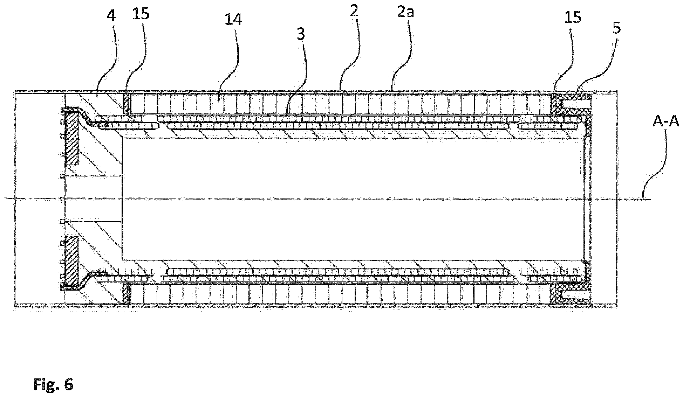

Nachdem die Spulenwicklung 3 in die Formmasse 4 eingetaucht ist und auf der Auflageoberfläche 5b und/oder auf dem Anlageabschnitt 5a des Dichtrings 5 auf- bzw. anliegt, wird die in dieser Weise zusammengesetzte Anordnung, insbesondere thermisch, ausgehärtet. Im Anschluss kann der in dieser Weise fertig gestellte Stator 1 von dem Formwerkzeug 20 entfernt werden. Ein Stator 1, der durch ein zuvor beschriebenes Verfahren hergestellt ist, ist in Fig. 6 dargestellt.

## Patentansprüche

1. Stator (1) für einen Elektromotor, aufweisend ein Gehäuse (2), welches eine Spulenwicklung (3) aufnimmt, wobei eine Formmasse (4) die Spulenwicklung (3) zumindest teilweise umschließt, wobei ein Dichtring (5) axial zwischen einer das Gehäuse (2) axial abschließenden Gehäusewand und der Spulenwicklung (3) angeordnet ist und der Dichtring (5) einen an einem stirnseitigen Endabschnitt (7) der Spulenwicklung (3) umfangsgemäß anliegenden Anlageabschnitt (5a) aufweist, und sich der Dichtring (5) zumindest von dem stirnseitigen Endabschnitt (7) der Spulenwicklung (3) bis zu einer Innenwand (6) eines die Spulenwicklung (3) umfangsgemäß umschließenden Teils des Gehäuses (2) radial erstreckt,
**dadurch gekennzeichnet, dass** der Dichtring (5) eine sich radial innen an den Anlageabschnitt (5a) anschließende, sich radial erstreckende Auflageoberfläche (5b) zur Auflage des stirnseitigen Endabschnitts (7) der Spulenwicklung (3) gegen axiale Bewegungen der Spulenwicklung (3) aufweist.

2. Stator (1) nach Anspruch 1,
**dadurch gekennzeichnet, dass** der Dichtring (5) eine Öffnung (5c) zum Durchführen eines Dorns (21) eines Formwerkzeugs (20) aufweist, und Dichtmittel zur Abdichtung eines zwischen dem Gehäuse (2) und dem Dorn (21) des Formwerkzeugs (20) verlaufenden Spaltes aufweist.

3. Stator (1) nach Anspruch 1 oder 2,
**dadurch gekennzeichnet, dass** der Anlageabschnitt (5a) und die Auflageoberfläche (5b) des Dichtrings (5) derart ausgestaltet sind, dass sie die Spulenwicklung (3) bezüglich einer Motorachse (A-A) des Elektromotors zentrieren.

4. Stator (1) nach einem der Ansprüche 1 bis 3,
**dadurch gekennzeichnet, dass** der Dichtring (5) eine ringförmige Dichtlippe (12) aufweist, wobei sich die Dichtlippe (12) radial innen an die Auflageoberfläche (5b) anschließt und insbesondere radial zwischen der Öffnung (5c) und der Auflageoberfläche (5b) angeordnet ist.

5. Stator (1) nach Anspruch 4,
**dadurch gekennzeichnet, dass** sich die Dichtlippe (12) in radialer Richtung verjüngt und eine stumpfwinklig zur Auflageoberfläche (5b) des Dichtrings (5) geneigte, kreisringförmige Oberfläche aufweist.

6. Stator (1) nach einem der Ansprüche 1 bis 5,
**dadurch gekennzeichnet, dass** die Auflageoberfläche (5b) des Dichtrings (5) kreisringförmig ausgebildet ist.

7. Stator (1) nach einem der Ansprüche 1 bis 6,
**dadurch gekennzeichnet, dass** zumindest ein kreisringförmiger Teil der Auflageoberfläche (5b) des Dichtrings (5) derart an eine Oberflächenkontur des stirnseitigen Endabschnitts (7) der Spulenwicklung (3) angepasst ausgestaltet ist, dass der stirnseitige Endabschnitt (7) der Spulenwicklung (3) formschlüssig mit dem Dichtring (5) gegen radiale Verdrehungen verbunden ist.

8. Stator (1) nach einem der Ansprüche 1 bis 7,
**dadurch gekennzeichnet, dass** die Spulenwicklung (3) als Segmentwicklung aus mehreren Einzelwicklungen (8) ausgestaltet ist.

9. Stator (1) nach Anspruch 8,
**dadurch gekennzeichnet, dass** die Auflageoberfläche (5b) des Dichtrings (5) eine Oberflächenkontur mit Ausnehmungen (9) aufweist, wobei die Ausnehmungen (9) an eine Oberflächenkontur von stirnseitigen Endabschnitten (10) der Einzelwicklungen (8) angepasst ausgestaltet sind.

10. Stator (1) nach Anspruch 9,
**dadurch gekennzeichnet, dass** die Ausnehmungen (9) derart ausgestaltet sind, dass sie die Einzelwicklungen (8) der Segmentwicklung derart ausrichten, dass sie gleichmäßig über den Umfang verteilt und in eine einheitliche Richtung ausgerichtet sind.

11. Stator (1) nach einem der Ansprüche 1 bis 10,
**dadurch gekennzeichnet, dass** der Dichtring (5) eine Ringnut (11) aufweist, die derart ausgestaltet ist, dass sie die radiale Elastizität des Dichtrings (5) verstärkt.

12. Stator (1) nach Anspruch 11,
**dadurch gekennzeichnet, dass** der Dichtring (5) im Bereich der Ringnut (11) im radialen Querschnitt U-förmig ausgebildet ist.

13. Stator (1) nach Anspruch 11 oder 12,
**dadurch gekennzeichnet, dass** sich die Ringnut (11) radial außen an den Anlageabschnitt (5a) des Dichtrings (5) anschließt.

14. Stator (1) nach einem der Ansprüche 1 bis 13,
**dadurch gekennzeichnet, dass** das Gehäuse (2) einen zylinderförmigen Gehäusemantel (2a) und zwei jeweils endseitig mit dem Gehäusemantel (2a) verbindbare Gehäusedeckel (2b) aufweist, wobei zumindest ein Gehäusedeckel (2b) Löcher (13) zum Einführen von Befestigungsmitteln zur Befestigung des Gehäuses (2) aufweist, wobei der Dichtring (5) axial zwischen dem Gehäusedeckel (2b) und der Spulenwicklung (3) angeordnet ist und der Dichtring (5), insbesondere mit seiner Auflageoberfläche (5b), einen Anschlag für die Befestigungsmittel bildet.

15. Verfahren zur Herstellung eines Stators (1) für einen Elektromotor gemäß einem der vorhergehenden Ansprüche 1 bis 14, bei dem ein Formwerkzeug (20) mit einem mit seiner Längsachse zentriert zu einer Motorachse (A-A) des Elektromotors verlaufenden zylindrischen Dorn (21) verwendet wird,
- wobei der Dichtring (5) axial auf den Dorn (21) des Formwerkzeugs (20) bis zu einer Auflage auf einem axial an den Dorn (21) anschließenden Anschlag (22) des Formwerkzeugs (20) aufgeschoben wird,
- wobei das Gehäuse (2) auf den Dorn (21) bis zu einer Auflage auf dem Anschlag (22) aufgesetzt wird,
- wobei eine Formmasse (4) in einen zwischen dem Gehäuse (2) und dem Dorn (21) gebildeten Zwischenraum gefüllt wird,
- wobei die Spulenwicklung (3) in die Formmasse (4) eingetaucht wird,
- wobei die Spulenwicklung (3) bis zu einer Anlage an, insbesondere zusätzlich einer Auflage auf, dem Dichtring (5) in das Gehäuse (2) eingesetzt wird,
- wobei die Formmasse (4) ausgehärtet wird und
- wobei das Formwerkzeug (20) von einem durch die vorherigen Schritte hergestellten Stator (1) gelöst wird.

16. Verfahren zur Herstellung eines Stators (1) nach Anspruch 15,
**dadurch gekennzeichnet, dass** die Spulenwicklung (3) als Segmentwicklung aus mehreren Einzelwicklungen (8) ausgestaltet ist.

## Claims

1. Stator (1) for an electric motor, comprising a housing (2), which accommodates a coil winding (3), wherein a moulding compound (4) at least partly encloses the coil winding (3), wherein a sealing ring (5) is arranged axially between a housing wall axially terminating the housing (2) and the coil winding (3) and the sealing ring (5) comprises a contact section (5a) circumferentially lying against a face end section (7) of the coil winding (3), and the sealing ring (5) radially extends at least from the face end section (7) of the coil winding (3) as far as to an inner wall (6) of a part of the housing (2) circumferentially enclosing the coil winding (3),
**characterized in that** the sealing ring (5) comprises a radially extending support surface (5b) adjoining the contact section (5a) radially inside for the support of the face end section (7) of the coil winding (3) against axial movements of the coil winding (3).

2. Stator (1) according to Claim 1, **characterized in that** the sealing ring (5) comprises an opening (5c) for passing through a mandrel (21) of a moulding tool (20), and comprises sealing means for sealing a gap running between the housing (2) and the mandrel (21) of the moulding tool (20).

3. Stator (1) according to Claim 1 or 2, **characterized in that** the contact section (5a) and the support surface (5b) of the sealing ring (5) are configured in such a manner that they centre the coil winding (3) with respect to a motor axis (A-A) of the electric motor.

4. Stator (1) according to any one of the Claims 1 to 3, **characterized in that** the sealing ring (5) comprises an annular sealing lip (12), wherein the sealing lip (12) adjoins the support surface (5b) radially inside and is arranged in particular radially between the opening (5c) and the support surface (5b).

5. Stator (1) according to Claim 4, **characterized in that** the sealing lip (12) tapers in the radial direction and has a circular-ring-shaped surface that is obtusely inclined towards the support surface (5b) of the sealing ring (5).

6. Stator (1) according to any one of the Claims 1 to 5, **characterized in that** the support surface (5b) of the sealing ring (5) is formed in the shape of a circular ring.

7. Stator (1) according to any one of the Claims 1 to 6, **characterized in that** at least one circular-ring-shaped part of the support surface (5b) of the sealing ring (5) is configured matched to a surface contour of the face end section (7) of the coil winding (3) in such a manner that the face end section (7) of the coil winding (3) is connected to the sealing ring (5) in a positive-locking manner against radial twisting.

8. Stator (1) according to any one of the Claims 1 to 7, **characterized in that** the coil winding (3) is configured as segment winding of multiple individual windings (8).

9. Stator (1) according to Claim 8, **characterized in that** the support surface (5b) of the sealing ring (5) comprises a surface contour with recesses (9), wherein the recesses (9) are configured matched to a surface contour of face end sections (10) of the individual windings (8).

10. Stator (1) according to Claim 9, **characterized in that** the recesses (9) are configured in such a manner that they align the individual windings (8) of the segment winding in such a manner that they are evenly distributed over the circumference and aligned in a uniform direction.

11. Stator (1) according to any one of the Claims 1 to 10, **characterized in that** the sealing ring (5) comprises an annular groove (11), which is configured in such a manner that it amplifies the radial elasticity of the sealing ring (5).

12. Stator (1) according to Claim 11, **characterized in that** the sealing ring (5), in the region of the annular groove (11), is formed U-shaped in the radial cross section.

13. Stator (1) according to Claim 11 or 12, **characterized in that** the annular groove (11) adjoins the contact section (5a) of the sealing ring (5) radially outside.

14. Stator (1) according to any one of the Claims 1 to 13, **characterized in that** the housing (2) comprises a cylindrical housing shell (2a) and two housing covers (2b) that are each connectable to the housing shell (2a) at the end side, wherein at least one housing cover (2b) comprises holes (13) for introducing fastening means for fastening the housing (2), wherein the sealing ring (5) is arranged axially between the housing cover (2b) and the coil winding (3) and the sealing ring (5), in particular with its support surface (5b), forms a stop for the fastening means.

15. Method for producing a stator (1) for an electric motor according to any one of the preceding Claims 1 to 14, in which a moulding tool (20) with a cylindrical mandrel (21) which with its longitudinal axis runs centred relative to a motor axis (A-A) of the electric motor is used,
- wherein the sealing ring (5) is axially slid onto the mandrel (21) of the moulding tool (20) until supported on a stop (22) of the moulding tool (20) axially adjoining the mandrel (21),
- wherein the housing (2) is placed onto the mandrel (21) until supported on the stop (22),
- wherein a moulding compound (4) is filled into an intermediate space formed between the housing (2) and the mandrel (21),
- wherein the coil winding (3) is dipped into the moulding compound (4),
- wherein the coil winding (3) is inserted into the housing (2) until it butts up against the sealing ring (5), in particular, in addition to being supported on the sealing ring,
- wherein the moulding compound (4) is cured and
- wherein the moulding tool (20) is detached from a stator (1) produced through the preceding steps.

16. Method for producing a stator (1) according to Claim 15, **characterized in that** the coil winding (3) is configured as segment winding of multiple individual windings (8).

## Revendications

1. Stator (1) pour un moteur électrique, comprenant une carcasse (2), laquelle reçoit un enroulement de bobine (3), une matière moulable (4) entourant au moins partiellement l'enroulement de bobine (3), une bague d'étanchéité (5) étant disposée axialement entre une paroi de carcasse terminant axialement la carcasse (2) et l'enroulement de bobine (3), et la bague d'étanchéité (5) comprenant une partie de butée (5a) s'appuyant de manière périphérique contre une partie d'extrémité frontale (7) de l'enroulement de bobine (3), et la bague d'étanchéité (5) s'étendant radialement au moins à partir de la partie d'extrémité frontale (7) de l'enroulement de bobine (3) jusqu'à une paroi intérieure (6) d'une partie de la carcasse (2) entourant l'enroulement de bobine (3) de manière périphérique,
**caractérisé en ce que** la bague d'étanchéité (5) comprend une surface d'appui (5b) se raccordant à la partie de butée (5a) radialement vers l'intérieur et s'étendant radialement pour l'appui de la partie d'extrémité frontale (7) de l'enroulement de bobine (3) de manière à empêcher des déplacements axiaux de l'enroulement de bobine (3).

2. Stator (1) selon la revendication 1,
**caractérisé en ce que** la bague d'étanchéité (5) comprend une ouverture (5c) pour le passage d'un mandrin (21) d'un outil de moulage (20), et des moyens d'étanchéité pour réaliser l'étanchéité d'une fente s'étendant entre la carcasse (2) et le mandrin (21) de l'outil de moulage (20) .

3. Stator (1) selon la revendication 1 ou 2,
**caractérisé en ce que** la partie de butée (5a) et la surface d'appui (5b) de la bague d'étanchéité (5) sont configurées de telle sorte qu'elle centrent l'enroulement de bobine (3) par rapport à un axe de moteur (A-A) du moteur électrique.

4. Stator (1) selon l'une des revendications 1 à 3,
**caractérisé en ce que** la bague d'étanchéité (5) comprend une lèvre d'étanchéité annulaire (12), la lèvre d'étanchéité (12) se raccordant à la surface d'appui (5b) radialement vers l'intérieur et étant disposée en particulier radialement entre l'ouverture (5c) et la surface d'appui (5b).

5. Stator (1) selon la revendication 4,
**caractérisé en ce que** la lèvre d'étanchéité (12) se rétrécit dans la direction radiale et comprend une surface en forme d'anneau circulaire inclinée suivant un angle obtus par rapport à la surface d'appui (5b) de la bague d'étanchéité (5).

6. Stator (1) selon l'une des revendications 1 à 5,
**caractérisé en ce que** la surface d'appui (5b) de la bague d'étanchéité (5) est réalisée en forme d'anneau circulaire.

7. Stator (1) selon l'une des revendications 1 à 6,
**caractérisé en ce qu'**au moins une partie en forme d'anneau circulaire de la surface d'appui (5b) de la bague d'étanchéité (5) est configurée de manière adaptée à un contour de surface de la partie d'extrémité frontale (7) de l'enroulement de bobine (3) de telle sorte que la partie d'extrémité frontale (7) de l'enroulement de bobine (3) soit reliée par complémentarité de forme à la bague d'étanchéité (5) de manière à empêcher des torsions radiales.

8. Stator (1) selon l'une des revendications 1 à 7,
**caractérisé en ce que** l'enroulement de bobine (3) est configuré en tant qu'enroulement de segment constitué de plusieurs enroulements individuels (8).

9. Stator (1) stator selon la revendication 8,
**caractérisé en ce que** la surface d'appui (5b) de la bague d'étanchéité (5) comprend un contour de surface doté d'évidements (9), les évidements (9) étant configurés de manière adaptée à un contour de surface de parties d'extrémité frontales (10) des enroulements individuels (8) .

10. Stator (1) selon la revendication 9,
**caractérisé en ce que** les évidements (9) sont configurés de telle sorte qu'ils orientent les enroulements individuels (8) de l'enroulement de segment de telle sorte qu'ils soient répartis régulièrement sur la périphérie et orientés dans une direction uniforme.

11. Stator (1) selon l'une des revendications 1 à 10,
**caractérisé en ce que** la bague d'étanchéité (5) comprend une rainure annulaire (11) qui est configurée de telle sorte qu'elle renforce l'élasticité radiale de la bague d'étanchéité (5).

12. Stator (1) selon la revendication 11,
**caractérisé en ce que** la bague d'étanchéité (5) est réalisée en forme de U en section transversale radiale dans la région de la rainure annulaire (11).

13. Stator (1) selon la revendication 11 ou 12,
**caractérisé en ce que** la rainure annulaire (11) se raccorde à la partie de butée (5a) de la bague d'étanchéité (5) radialement à l'extérieur.

14. Stator (1) selon l'une des revendications 1 à 13, **caractérisé en ce que** la carcasse (2) comprend une enveloppe de carcasse cylindrique (2a) et deux couvercles de carcasse (2b) pouvant être reliés à l'enveloppe de carcasse (2a) respectivement du côté des extrémités, au moins un couvercle de carcasse (2b) comprenant des trous (13) pour l'insertion de moyens de fixation pour la fixation de la carcasse (2), la bague d'étanchéité (5) étant disposée axialement entre le couvercle de carcasse (2b) et l'enroulement de bobine (3) et la bague d'étanchéité (5) formant, en particulier par sa surface d'appui (5b), une butée pour les moyens de fixation.

15. Procédé de fabrication d'un stator (1) pour un moteur électrique selon l'une des revendications précédentes 1 à 14, dans lequel un outil de moulage (20) est utilisé, lequel est doté d'un mandrin cylindrique (21) s'étendant de telle sorte que son axe longitudinal soit centré par rapport à un axe de moteur (A-A) du moteur électrique,
- la bague d'étanchéité (5) étant enfilée axialement sur le mandrin (21) de l'outil de moulage (20) jusqu'à venir en appui sur une butée (22) de l'outil de moulage (20) se raccordant axialement au mandrin (21),
- la carcasse (2) étant placée sur le mandrin (21) jusqu'à venir en appui sur la butée (22),
- une matière moulable (4) étant introduite dans un espace intermédiaire formé entre la carcasse (2) et le mandrin (21),
- l'enroulement de bobine (3) étant plongé dans la matière moulable (4),
- l'enroulement de bobine (3) étant inséré dans la carcasse (2) jusqu'à venir en butée contre, en particulier en outre en appui sur, la bague d'étanchéité (5) ,
- la matière moulable (4) étant durcie et
- l'outil de moulage (20) étant séparé d'un stator (1) fabriqué selon les étapes précédentes.

16. Procédé de fabrication d'un stator (1) selon la revendication 15,
**caractérisé en ce que** l'enroulement de bobine (3) est configuré en tant qu'enroulement de segment constitué de plusieurs enroulements individuels (8).
